# EUROPEAN PATENT SPECIFICATION

(11) **EP 1 685 397 B1**
(45) Date of publication and mention of the grant of the patent: **05.01.2011**
(21) Application number: 04800778.5
(22) Date of filing: 08.11.2004
(51) Int. Cl.: G01N 30/40

(54) **HIGH THROUGHPUT AUTOSAMPLER**
PROBENNAHMEAUTOMAT MIT HOHEM DURCHSATZ
PASSEUR AUTOMATIQUE D'ECHANTILLONS A HAUT DEBIT

(30) Priority: 07.11.2003 US 518240 P
(43) Date of publication of application: 02.08.2006
(60) Divisional application: 10160627.5
(73) Proprietor: Biocius Life Sciences, Inc., Woburn, MA 01801-1728 (US)
(72) Inventor: OZBAL, Can, Maynard, MA 01754 (US); Donald Green, Arlington MA 02476 (US)
(74) Representative: Mohun, Stephen John
(86) International application number: PCT/US2004/036885
(87) International publication number: WO 2005/048126

(56) References cited:
- US-A- 4 913 821
- US-A- 5 814 742
- US-A- 6 149 818

## Description

### Technical Field

The present invention relates generally to high throughput screening of fluidic samples, and more particularly, to automated systems and methods for increasing sample throughput of fluidic samples.

### Background Art

In many applications, such as drug discovery and development, environmental testing, and diagnostics, there is a need to analyze a large number of samples in an efficient and reproducible manner. Many of the techniques used to analyze fluidic samples require that the samples be tested in a serial manner. In such applications, the process of serial analysis can be automated through the use of a computer controlled robotics and automation. Such devices are generally called auto-injectors and are commonly interfaced to all manner of serial analysis systems including, but not limited to, chromatography systems, mass spectrometers, and spectroscopic detectors.

Typical auto-injectors include a plurality of sample reservoirs, a syringe or syringe-like sample transport system, and an injection valve along with the automation and computer control systems. Auto-injectors commonly mimic cumbersome manual injection methods in which a metered aliquot of a sample is aspirated from a desired sample reservoir into a transfer syringe. The aspiration process is often controlled by pulling back on a plunger or piston to create a negative pressure resulting in aspiration of the sample. The transfer syringe is then moved to and docked with a stationary injection valve. The sample aliquot is then transferred from the syringe to the injection valve by depressing the transfer syringe plunger or activating the piston. The sample fills an injection loop within the injection valve. Upon actuation of the valve the sample is introduced into the fluidic circuit and diverted to the analysis system.

The transfer syringe and the injection valve ports are then rinsed with an appropriate buffer or solvent to remove traces of the analyte to minimize contamination between samples. Contamination of the fluidic system with a sample can cause a significant barrier to the successful operation of a serial analysis system resulting in carryover and compromised data. After an appropriate cleaning protocol the entire process is repeated for the next sample.

Various embodiments of this general approach to auto-injectors are available commercially. Sample reservoirs used in auto-injectors range from glass vials to 96 or 384-well microtiter plates. Sample reservoirs may be sealed with a plastic film or metal foil, or a septum. Some auto-injection devices use conventional syringes of various sizes attached to a robotic arm. Other devices use a tube attached to a small piston. The sample is aspirated into this tube and transferred to the injection valve. Some versions of auto-injectors attempt to increase throughput by using multiple syringes such that while an injection is being made by one syringe others are being washed. One auto-injector increases throughput with a simultaneous aspiration of eight samples. These samples are then loaded into the sample injection loops of eight separate injection valves. The samples are then sequentially diverted from each of the eight injection valves into the analysis system. Throughput is thus increased through the parallelism of the process, however at increased cost and complexity.

Mass spectrometry (MS) with atmospheric pressure ionization (API) is a commonly used technique for the analysis of complex mixtures. Variations of API-MS, include electrospray ionization (ESI), atmospheric pressure chemical ionization (APCI) and atmospheric pressure photoionization (APPI). API-MS is used routinely in the pharmaceutical industry, environmental and forensic analysis, materials science, and in scientific applications. Both quantitative and qualitative information about specific compounds in complex mixtures can be obtained with the use of API-MS methods.

However, API-MS has several drawbacks. Traditionally, MS is a serial process in which samples are analyzed sequentially unlike parallel analysis schemes typically employed in many optical analysis systems. Sequential analysis can be impractical and in many cases economically unviable if very large numbers of samples are to be analyzed.

Furthermore, many compounds typically found at high concentrations in complex biological, chemical, or environmental samples, such as salts, buffers, ionic or non-ionic detergents, proteins or enzymes, and other cofactors can cause a significant reduction in the amount of target signal observed in mass spectrometry. Interference from high concentrations of non-volatile components are particularly troublesome because in addition to causing signal suppression non-volatile compounds tend to build up in the source region of the MS and gradually result in a decline in instrument performance.

The inherent expense involved in purchasing and operating mass spectrometers makes it highly desirable to improve productivity by devising methods and devices for increasing the analysis throughput (i.e.: the number of samples that can be analyzed in a given time). Any method and device that attempts to increase throughput in API-MS must address several key issues such as: 1) a rapid system for delivery of a sample to the mass spectrometer must be designed; 2) the components of complex mixtures that cause suppression of the target signal must be isolated and removed from the analytes of interest; 3) the non-volatile components of complex mixtures that build up in the MS source and result in a decay of instrument performance over time must be isolated and removed; and 4) each sample must be cleaned from the analysis system to an acceptable level before the next sample is analyzed to prevent sample-to-sample carryover that will result in contamination of the data.

Liquid chromatography (LC) can be used to remove the salts, buffers, and other components from complex mixtures that may cause suppression of the MS signal of interest or result in degradation of MS instrument performance. Conventional liquid chromatography (LC) and its variations, such as high performance liquid chromatography (HPLC), typically involve flowing a liquid sample over a solid, insoluble matrix (generally referred to as Solid Phase Extraction (SPE)) commonly packed in a column format. The liquid sample includes an analyte(s) of interest that has an affinity for the matrix under certain conditions of pH, salt concentration, or solvent composition. Affinity of the analyte(s) of interest to the matrix may be due to hydrophobic or hydrophilic interactions, ionic interactions, molecular size, or coordination chemistry. In a highly specific variation, antibodies immobilized to the matrix are used to selectively capture molecules containing a highly specific epitope from complex mixtures.

As a result of the analyte(s) affinity to the matrix, the analyte(s) binds to the matrix and becomes immobilized while other (undesired) components of the liquid sample flow through the matrix and are removed. The analyte(s) of interest are then eluted away from the matrix by changing the conditions of the flowing liquid, such that the analyte of interest no longer has affinity for the matrix. For example, changes in pH, ionic strength, solvent composition, temperature, and/or other physicochemical parameters may weaken the affinity of the analyte(s) for the matrix.

However, the traditional use of liquid chromatography in high-throughput mass spectrometry has limitations. Very often, the throughput of a serial analysis is limited by the time it takes to collect the signal from an individual sample. In liquid chromatography applications, the matrix output signal from an analyte of interest is in the form of a peak, and the width of this peak in time is the ultimate determinant of the maximum throughput. A key factor in increasing mass spectrometry throughput is the elution of the samples of interest from the insoluble matrix as a tight, sharp band that is presented to the mass spectrometer in the shortest amount of time. For example, to achieve an overall throughput greater than 30 seconds per sample, with baseline resolution of each sample, the peak width must be narrower than 30 seconds. As throughput is increased, more stringent requirements on the peak width must be imposed. If the throughput begins to approach the peak width, the sequential samples begin to overlap, baseline resolution between samples in the MS is lost, and accurate quantification for each sample is no longer possible.

In traditional LC, the aaalyte(s) of interest that are bound to the insoluble solid matrix (typically packed in a column format) are eluted away from the matrix by changing various properties of the liquid flowing over the matrix such that the analyte(s) are no longer immobilized on the column. However, as the analyte(s) flow through the length of the matrix a phenomenon known as band broadening occurs, in which linear diffusion causes the volume which contains the focused analyte(s) to expand. Consequently, the concentration of the analyte of interest presented to the mass spectrometer (or other analyzer) is decreased, and a broad peak is produced that makes High Throughput Screening (HTS) problematic.

### Summary of the Invention

The invention is defined in the attached independent claims to which reference should now be made. Further, preferred features may be found in the sub-claims appended thereto.

The current invention describes a system and method for increasing the throughput of analysis of selected components in complex biological, chemical, or environmental matrices with the use of, for example, chromatography and/or mass spectrometry. In various embodiments, throughput rates ranging from 30 seconds per sample to 1 second per sample or faster are achievable, depending on the specific application. Further embodiments of the invention include an auto-injection system that increases throughput and minimizes sample carryover.

In accordance with one aspect of the invention, there is provided a system for high throughput sample preparation and analysis. The system includes a chromatography column including an insoluble matrix. A fluidic circuit is capable of passing a fluid over the insoluble matrix in a first direction such that an analyte in the fluid binds to the insoluble matrix, and back-eluting an elution fluid over the insoluble matrix in a second direction opposite the first direction to output a sample that includes the analyte. A controller controls the fluidic circuit to periodically perform the steps of passing the fluid over the insoluble matrix and back-eluting the elution fluid over the insoluble matrix to output a plurality of samples at a periodic rate.

In accordance with related embodiments of the invention, the periodic rate is 30 seconds/sample or faster. The fluidic circuit may include a valving module capable of alternately directing fluid over the insoluble matrix in the first direction and back-eluting an elution fluid over the insoluble matrix in the second direction. The valving module may include at least one pneumatically actuated valve and/or have an actuation time of faster than 100 milliseconds.

In accordance with further related embodiments of the invention, the system may further include an analyzer for analyzing one or more of the samples. The analyzer may be, for example, an optical analyzer or a mass spectrometer that outputs a signal representative of the one or more samples. The fluidic circuit may include a valve module that is actuated to back-elute the elution fluid over the insoluble matrix, and wherein the controller integrates the signal for a predetermined time after the valve module is actuated to determine a characteristic of the sample. The mass spectrometer may include, without limitation, an electrospray ionization source, an atmospheric pressure chemical ionization source, or an atmospheric pressure photoionization source.

In accordance with still further related embodiments of the invention, the fluidic circuit may include tubing having a diameter between 20 µm to 300 µm. The fluidic circuit may include one or more surfaces which contact the fluid, wherein each surface is bioinert, such that it is non-reactive. Each surface may include, for example, poly ether ether ketone, polyimide, titanium, and/or titanium alloy. The fluidic circuit may include a fluidic pathway made of steel coated with a material to minimize binding with the analyte, such as polytetrafluoroethylene and/or polyethylene glycol. The fluidic circuit may include an aspirator for aspirating an aliquot of the fluid to be passed over the insoluble matrix. The chromatography column may include a first end and a second end, wherein the analyte enters and exits the chromatography column at the first end.

In accordance with another aspect of the invention, a method of high throughput sample preparation and analysis includes passing a fluid over an insoluble matrix in a first direction, the fluid including an analyte that binds to the insoluble matrix. An elution fluid is back-eluted over the insoluble matrix in a second direction opposite the first direction to output a sample that includes the analyte. The steps of passing the fluid and back-eluting the elution fluid are repeated so as to output a plurality of samples at a periodic rate.

In accordance with related embodiments of the invention, the periodic rate is 30 seconds/sample or faster. Analyzing each sample may include presenting each sample to a mass spectrometer. Back-eluting may includes actuating a valving element to initiate flow of the elution fluid over the insoluble matrix, wherein the method further includes integrating an output of the mass spectrometer for a predetermined time after the valve is actuated to determine a characteristic of the sample. Wash solution may be passed over the chromatography matrix prior to passing the fluid over the insoluble matrix, or back eluting the elution fluid. The fluid may be aspirated from a fluid source prior to passing the fluid over an insoluble matrix. The chromatography matrix may be packaged in a column format.

In accordance with still another aspect of the invention, a system for high throughput sample preparation and analysis includes a plurality of chromatography columns and a mass spectrometer. A valve is capable of selectively presenting effluent from one of the plurality of chromatography columns to the mass spectrometer.

In accordance with related embodiments of the invention, the valve may be actuated to present effluent from one of the plurality of chromatography columns to the mass spectrometer. A processor may receive an output signal from the mass spectrometer, and integrate the output for a predetermined time after the valve is actuated to determine a characteristic of the sample.

In still other aspects of the invention, a computer program product is presented for use on a computer system for controlling a high throughput system having a fluidic circuit in fluid communication with a chromatography column. The computer program product includes a computer usable medium having computer readable program code thereon. The computer readable program code includes program code for controlling the fluidic circuit to pass a fluid over the insoluble matrix in a first direction such that an analyte in the fluid binds to the insoluble matrix. The computer readable program code also includes program code for controlling the fluidic circuit to back-elute an elution fluid over the insoluble matrix in a second direction opposite the first direction to output a sample that includes the analyte; and program code for repeating the passing of the fluid and the back-eluting the elution fluid to output samples at a periodic rate.

In accordance with related embodiments of the invention, the computer readable program code for controlling the fluidic circuit to back-elute the elution fluid includes program code for actuating a valve module that allows the elution fluid to flow through the chromatography column in the second direction. The high throughput system may include a mass spectrometer for analyzing the sample, wherein the computer program product further includes program code for integrating an output of the mass spectrometer upon actuation of the valve module to determine a characteristic of the sample.

In accordance with another embodiment of the invention, an auto-injection system for high throughput screening of fluidic samples includes a sample sipper tube, a sample loop, and an injection valve. The injection valve applies a reduced pressure to the sample sipper tube. When the injection valve is in a first position, the sample loop is in fluid communication with the sample sipper tube.

In related embodiments of the invention, the system may further include a vacuum means for supplying the reduced pressure. The vacuum means may include a vacuum pump for continuous application of reduced pressure and/or a piston for metered application of reduced pressure. A valve may select one of the vacuum pump and the piston pump as a source of the reduced pressure. An inline trap may be positioned between the vacuum means and the injection valve. A cutoff valve, which may be a solenoid valve, may meter an amount of sample fluid to be aspirated into the sample loop via the sample sipper tube, the cutoff valve positioned between the vacuum means and the injection valve. Fluid contacting surfaces of the system may be made of a material from the group of materials consisting of Teflon, fused silica, and poly ether ether ketone.

In further related embodiments of the invention, when the injection valve is in a second position, the sample loop is in fluid communication with an output port of the injection valve. When the injection valve is in the second position, the sample sipper tube may be in fluid communication with a source of the reduced pressure so as to aspirate wash fluid, an inline-trap capturing the wash fluid.

In accordance with still another aspect of the invention, an auto-injection system for high throughput screening of fluidic samples includes a source of reduced pressure, a sample loop, a sample sipper tube, and an injection valve. The injection valve includes a first port in fluid communication with the sample sipper tube; a second port in fluid communication with the sample loop; a third port in fluid communication with the sample loop; and a fourth port in fluid communication with the source of reduced pressure.

In related embodiments of the invention, when the injection valve is in a first position the source of reduced pressure, the sample loop, and the sample sipper tube are in fluid communication. The injection valve may include a fifth port for outputting sample fluid from the sample loop. When the injection valve is in a second position, the sample loop is in fluid communication with the fifth port. The system may include a source of high pressure, and wherein the injection valve further includes a sixth port in fluid communication with the source of high pressure.

The source of reduced pressure may include a vacuum pump and/or a piston. A valve may select one of the vacuum pump and the piston pump as a source of the reduced pressure. An inline trap may be positioned between the source of reduced pressure and the injection valve. When the injection valve is in a second position, the sample sipper tube may be in fluid communication with the source of the reduced pressure so as to aspirate wash fluid, the inline-trap capturing the wash fluid. A cutoff valve, such as a solenoid valve, may be used for metering an amount of sample fluid to be aspirated into the sample loop via the sample sipper tube, the cutoff valve positioned between the source of reduced pressure and the injection valve.

In accordance with another embodiment of the invention, an autosampler system for repetitive sampling and presentation of samples includes a fluidic circuit. The fluidic circuit includes a sample port in fluid communication with an injection valve. The fluidic circuit further includes means for applying a reduced pressure to the sample port to load a sample into the fluidic circuit. The sample is presented, via output means, into an analyzer from an output port of the fluidic circuit that is distinct from the sample port. The system further includes automated means for positioning the multiple samples relative to the sample port.

In related embodiments of the invention, the means for applying a reduced pressure may include a trap, and/or may continuously apply a negative pressure to the sample port throughout the presentation of samples. The automated means for positioning multiple samples may include a robotic device for successively presenting wells of microplates. The samples are processed at a rate of greater than one sample every 30 seconds. The analyzer may be a mass spectrometer. The sample may be aspirated intermittently into the sample port, while fluid is continuously injected into the analyzer.

In further related embodiments of the invention, the fluidic circuit may include a resin for purification of the samples. The system may further include means for introduction of a sample to the resin, washing the resin with a wash solution and back-eluting the sample with an elution solution prior to presentation.

In accordance with another embodiment of the invention, a system for high throughput sample preparation and analysis includes a chromatography column including an insoluble matrix. Fluidic circuit means passes a fluid over the insoluble matrix in a first direction such that an analyte in the fluid binds to the insoluble matrix, and passes an elution fluid over the insoluble matrix to output the analyte to an analyzer. A controller controls the fluidic circuit to periodically perform the steps of passing the fluid over the insoluble matrix and passing the elution fluid over the insoluble matrix to output to the analyzer a plurality of samples at a periodic rate, such that the fluidic circuit presents only at least one of the elution fluid and the analyte to the analyzer.

In accordance with another embodiment of the invention, a system for high throughput screening of fluid samples includes a sample aspiration tube, a valving element, sample loop, and an analyzer. A controller controls the valving element to alternatively aspirate a first fluid into the sample loop via the sample aspiration tube, and aspirate a second fluid via the aspiration tube while simultaneously outputting the first fluid in the sample loop to the analyzer.

### Brief Description of the Drawings

The foregoing features of the invention will be more readily understood by reference to the following detailed description, taken with reference to the accompanying drawings, in which:
Fig. 1 is a block diagram of a rapid chromatography system, in accordance with an embodiment of the invention;
Fig. 2(a) is a schematic of a rapid chromatography system that includes two injection valves, in accordance with an embodiment of the invention;
Fig. 2(b) is a schematic of the rapid chromatography system of Fig. 2(a) when a complex mixture is passed through a matrix in a first direction, in accordance with an embodiment of the invention;
Fig. 2(c) is a schematic of the rapid chromatography system of Fig. 2(a) when elution fluid is passed through the matrix in a second direction, in accordance with an embodiment of the invention; and
Fig. 3 is a schematic of a multiplexed analyzer system, in accordance with an embodiment of the invention.
Fig. 4 is a schematic of an auto-injection device, in accordance with an embodiment of the invention.
Fig. 5(a) is a schematic of the auto-injection device of Fig. 4 during sample aspiration, in accordance with an embodiment of the invention.
Fig. 5(b) is a schematic of the auto-injection device of Fig. 4 when aspirated sample is output to a fluidic circuit, in accordance with an embodiment of the invention.

### Detailed Description of Specific Embodiments

In illustrative embodiments, an automated system and method for increasing sample throughput and/or analysis of selected components in complex biological, chemical, or environmental matrices is presented. Generally, the system includes a chromatography column and fluidic circuit that is capable of rapidly outputting a plurality of samples to an analyzer, such as a mass spectrometer. In various embodiments, sample throughput rates ranging from 30 seconds per sample to 1 second per sample or faster are achievable, depending on the specific application. Further embodiments of the invention include an auto-injéction system that increases throughput and minimizes sample carryover. Details are discussed below.

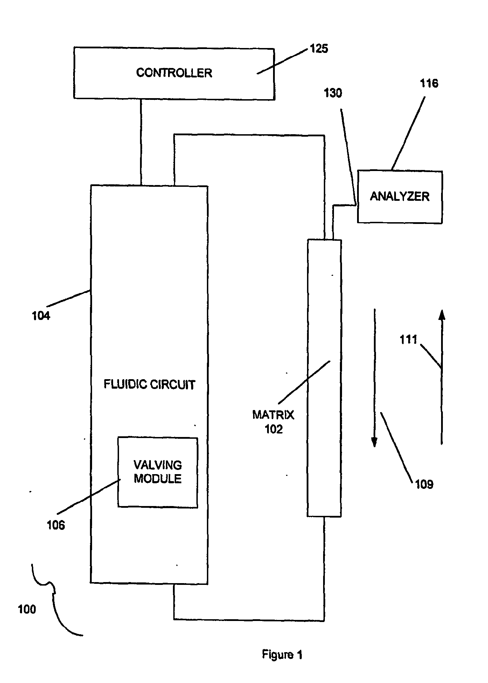

Fig. 1 shows a block diagram of a rapid chromatography system 100 for rapidly outputting an analyte of interest while removing undesirable salts, buffers, and other components from a complex mixture, in accordance with one embodiment of the invention. Such undesirable components may, for example, degrade analyzer performance or cause an output signal from an analyzer to be suppressed.

The system 100 relies on the principle of back-elution for the specific purpose of increasing sample throughput. In particular, the complex mixture to be analyzed is delivered to an insoluble matrix 102 in a first direction 109 via a fluidic circuit 104. The matrix 102, which may be packed in a chromatography column, is selected such that the analyte(s) of interest is selectively immobilized. The matrix 102 may be, without limitation, various resins known in the art of chromatography. Typically, the analyte binds to the first part of the matrix 102 encountered due to a phenomenon known as focusing. In focusing, a large amount of the analyte may be immobilized in a very small physical space within the head of the matrix 102 due to a strong affinity for that matrix 102.

Non-binding components of the complex mixture, which may include, without limitation, salts, buffers, and/or detergents, are not so immobilized and pass through the insoluble matrix 102. These undesirable components are typically diverted to waste by the fluidic circuit 104. To ensure sufficient removal of the undesirable components, the matrix 102 may be washed for a predetermined period of time, while the analyte(s) of interest is still immobilized and focused on the head of the matrix.

Once the undesirable components have been removed from the matrix, elution fluid is passed via the fluidic circuit 104 over the matrix 102 such that the analyte(s) is no longer immobilized by the matrix 102. However, instead of passing the elution fluid over the matrix 102 in the first direction 109, the elution fluid is passed over the matrix 102 in a second direction 111 that is substantially opposite the first direction 109, in accordance with preferred embodiments of the invention. Thus, the analyte(s) does not travel through the length of the matrix 102, but is instead back-eluted from the matrix 102 in the opposite direction it was loaded. Due to the focusing effect, the analyte(s) does not have to travel through the entire bed of the chromatography matrix 102, and a minimal amount of linear diffusion takes place. Thus, a sharp, concentrated sample peak can be output from the matrix 102 within a minimal bandwidth of time. The sharp sample peak obtained by back-elution is significantly sharper than those obtained when using conventional chromatography. The samples back-eluted from the matrix 102, which contain the analyte(s) of interest, can subsequently be introduced into an analyzer 116 in a rapid and concentrated manner.

In various embodiments of the invention, a controller 125 automatically controls the fluidic circuit 104 to periodically perform the steps of passing the fluid over the matrix 102 in the first direction and back-eluting the elution fluid over the matrix 102 in the second direction, so as to obtain a high sample-throughput rate. The controller 125 may include, without limitation, a processor which may be appropriately pre-programmed or configured to be loaded with an appropriate program. The controller 125 may work in conjunction with a robotic system that samples an aliquot of the complex mixture to be analyzed, and that allows for sequential presentation of each complex mixture to be analyzed. Various methodologies may be used in which containers of each complex mixture to be analyzed and a sipper tube can be moved relative to one another to allow for sequential sampling. These methodologies include, but are not limited to, systems in which the containers of the liquid to be analyzed (e.g., a microtiter plate or an array of vials) are held in a fixed position and the sipper tube is translocated by means of a robotic arm to sequentially sample each container. In other embodiments, the sipper tube can be immobilized and each container to be analyzed can be moved into a position where an aliquot can be sampled. In an embodiment, liquid samples can be transported to the sipper tube with the use of a laminated tape or belt system for sequential analysis, as described in the following copending U.S. Patent Applications: U.S. Patent Application Serial No. 09/842,361, filed April 25, 2001, entitled "System and Method for High Throughput Processing of Droplets,"; U.S. Patent Application Serial No. 10/267,912, filed October 8, 2002, entitled "System and Method for High Throughput Screening of Droplets"; and U.S. Patent Application Serial No. 09/893,311, filed June 27, 2001, entitled "A System and Method for High Throughput Sample Preparation and Analysis Using Column Chromatography", Systems that incorporate elements of both approaches (e.g., moving the sample containers in two dimensions and the sipper tube in one dimension) are also possible.

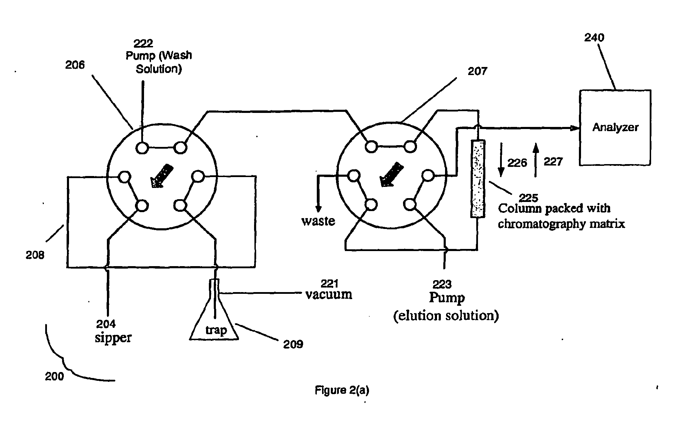

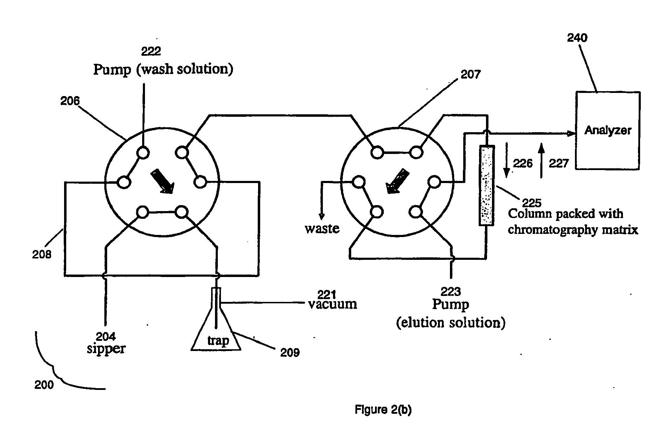

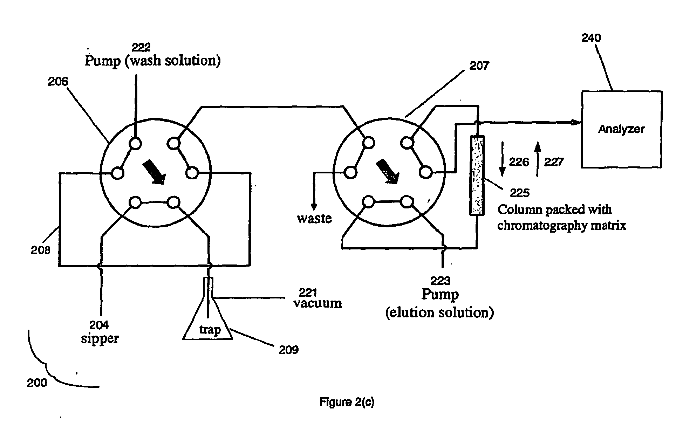

The fluidic circuit 104 may include a valving module 106 that is capable of alternately directing fluid over the matrix in the first direction and back-eluting the elution fluid over the matrix in the second direction. Valving module 106 may include one or more valves. For example, Figs. 2(a-c) are schematics of a chromatography system 200 that includes a chromatography matrix 225 and two injection valves 206 and 207, in accordance with one embodiment of the invention.

Fig. 2(a) shows the position of the valves 206 and 207 when the complex mixture is being loaded into a sample loop 208. A reduced pressure 221 and an increased pressure 222 is continuously applied, by pumps, for example, to a first port and a second of port of the valve 206. The reduced pressure 221 is used to aspirate the complex mixture via a sipper tube 204. The sipper tube 204 may be, without limitation, narrow-bore capillary tubing. Enough of the complex mixture to fill sample loop 208 with a defined volume is aspirated. The amount of complex mixture to be passed over the matrix 225 can thus be controlled by the size of the sample loop 208. Any excess mixture aspirated is collected in a trap 209 that may be positioned, for example, between the injection valve 206 and the reduced pressure source 221.

In various embodiments, a wash solvent or buffer solution is positioned between the region of increased pressure 222 and the injection valve 206. While the complex mixture is being loaded into the sample loop 206, the increased pressure 222 applied to valve 206 pumps wash fluid to valve 207, which passes the wash fluid through the matrix 225 in a first direction 226. The output of the matrix 225 is diverted to waste by the valve 207. Additionally, an increased pressure 223 continuously applied to valve 207 pumps elution fluid, which may be positioned between the region of increased pressure 223 and valve 207, to an analyzer 240. In this manner, carryover from previous complex mixture/samples is flushed from the matrix 225 and the analyzer 240 while the complex mixture is being loaded into the sample loop 206.

Fig. 2(b) shows the position of the valves 206 and 207 when the metered complex mixture from the sample loop 206 is passed through the matrix 225, in accordance with one embodiment of the invention. Upon actuation of the injection valve 206, the complex mixture, followed by wash fluid, is passed through the matrix 225 in the first direction 226. Due to the focusing effect, the analyte of interest binds to the first part of the matrix 225, as discussed above. The wash fluid that follows the sample ensures sufficient removal of the undesirable components (e.g. salts, buffers, detergents, etc.) from the matrix 225, which are diverted to waste. To clean the sipper tube 204 prior to aspiration of the next sample loop of complex mixture, the sipper tube 104 is dipped into a wash solvent or buffer solution. The reduced pressure 221 applied to the sipper tube 104 passes wash solvent through the sipper tube 204 and into trap 209.

After the analyte(s) of interest has been loaded onto the matrix 225 and the undesirable components removed, the valves 206 and 207 divert the pumping system that loads the complex mixture onto the matrix 225 away from the head of the matrix 225. Simultaneously, an elution fluid is passed through the matrix 225 in substantially the opposite direction 227 from which the complex mixture was loaded. The elution fluid, which may be either a solution or a solvent, dissociates the bound analyte(s) of interest from the matrix 225. In various embodiments, separate pumping systems are used to load the complex mixture, and pump the elution fluid across, the matrix 225.

Fig. 2(c) shows the position of the valves 206 and 207 when elution fluid is back-eluted through the matrix 225, in accordance with one embodiment of the invention. Valve 207 is actuated to pass the elution fluid to the matrix 225 in the second direction 227. Since the analyte is primarily immobilized within the head 226 of the matrix 225 due to the focusing effect, and does not have to travel the entire length of the matrix 225, thus limiting diffusion, the sample output of the matrix is delivered to the analyzer 240 in a concentrated manner within a small bandwidth of time. While back-eluting, wash solution is passed through the sample loop 206 to clean and prepare the sample loop 206 for subsequent aspiration of complex mixture.

The analyzer 240 may be, for example, an optical interrogator or mass spectrometer. In various embodiments, the sample may be presented directly to a mass spectrometer using a variety of standard systems, including atmospheric pressure chemical ionization (APCI), electrospray ionization (ESI) or atmospheric pressure photoionization (APPI). The mass spectrometer is capable of quantitatively analyzing a large number of compounds based on the mass-to-charge ratio of each compound. Further separation of individual compounds is generally not necessary, since an accurate mass-selective detection and quantification can be performed by mass spectrometry. The output of the MS is analyzed and the amount of compound present in the sample is determined by integrating the area under the MS peak.

After back-eluting, both valves 206 and 207 are actuated as shown in Fig. 2(a). The steps of loading the complex mixture into the sample loop 208 (if implemented), passing the complex mixture over the matrix 225 in the first direction , and back-eluting the elution fluid over the matrix 225 in the second direction are then periodically repeated so as to achieve a high sample-throughput rate.

### Minimizing Peak Width of Matrix Sample Output

The sample peak width (at half height) at the output of the matrix 225 can be further minimized by selecting appropriate flow rates from the pumping systems 221, 222, and 223 and by selecting tubing diameters that further minimize linear diffusion as the complex mixture and samples are moved through the fluidic circuit 104. Typically, narrower bore tubing produces sharper peaks enabling higher throughput, but also lead to higher back-pressure in the fluidic pumping system. Similarly, higher flow rates also generally result in sharper peaks, but also lead to higher back-pressure. High flow rates can also lead to decreased signal intensity in a mass spectrometer due to incomplete sample ionization. Determining the maximum throughput of the system is therefore a compromise between several factors that can be modeled or determined empirically. The various parameters used, including the nature and type of the insoluble matrix, pumping flow rates and pressures, tubing specifications, the nature of the fluids used to perform the rapid chromatography, and the timing of the switching of the fluidic valves 206 and 207 must be optimized for each family of chemical compounds to be analyzed. This set of optimized parameters makes up a compound-specific method for high throughput mass spectrometric analysis. In accordance with various embodiments of the invention, typical ranges for tubing diameters range from 20 µm to 300 µm and flow rates range from 0.1 mL/min to 5 mL/min resulting in backpressures than may reach anywhere from 5 to 6000 psi (1 psi = 6,894 · 10³Pa).

### Minimizing Carryover

A major concern in maximizing sample throughput is the elimination of sample-to-sample carryover. Referring back to Fig. 1, any sample that is not removed from the fluidic circuit 104, matrix 102, and analyzer interface 130 after one analysis may cause interference with the next sample. If a sample with a low level of analyte is preceded by a sample with a high level of analyte, carryover from the first sample may result in an incorrect analysis in the second, low analyte sample. Minimizing carryover is typically achieved by washing the fluidic circuit 104, matrix 102, and analyzer interface 130 with a solvent that fully solubilizes the analytes of interest so that they are removed from the system 100. Various embodiments of the invention also use this technique, and the fluidic circuit 104, matrix 102, and analyzer interface 130 may be flushed with the elution buffer/wash solution to minimize sample carryover.

Washing of the fluidic circuit 104 and other components of the system 100 which contact the complex mixture and/or sample is conventionally a time consuming step and a long washing step between samples limits the overall throughput of the system. Therefore, a system that requires a minimum amount of washing while producing an acceptably low level of carryover is highly desirable. This requirement can be achieved, in part, by making those surfaces in the fluidic circuit 104 and other components in the system 100 which contact the complex mixture and/or sample (including the sample loop 206, valving module 106, MS interface 130 , etc.) bio-inert so as to minimize the amount of carryover and ease cleaning. Furthermore, due to the high backpressures generated by the pumping system, such surfaces must have a strong mechanical resistance and the ability to resist high pressure liquids without leaks.

A commonly used material for such systems is Poly Ether Ether Ketone (PEEK) that has strong chemical resistance and can be manufactured in a wide range of interior and exterior diameters. However, in preferred embodiments of the invention, the tubing within the fluidic circuit 104 is manufactured from polyimide. Polyimide tubing has exceptionally low carryover of even very highly hydrophobic compounds, can resist high pressures before failing and can be manufactured in the 20 - 300 micrometer inner diameters that are optimum for minimizing linear diffusion. Use of a polyimide fluidic system allows for very rapid washing steps between samples for a wide range of analytes with minimal carryover. Another option for the construction of the fluidic circuit 104 and other components which contact the complex mixture and/or sample is titanium or titanium alloys that are also known to have low carryover properties. The fluidic circuit 104 may also include a microfluidic biochip that may have, without limitation, channels having a diameter between 20 µm to 300 µm optimized for minimal linear diffusion.

Another embodiment of the invention is to construct the fluidic pathway in full or in part from a material such as stainless steel. Stainless steel is not a particularly bio-inert substrate and tends to strongly adsorb hydrophobic compounds in its surface. However, the surfaces of the fluidic circuit 104 and other components which contact the complex mixture and/or sample may be chemically or physically coated with a hydrophobic or hydrophilic film (e.g., Teflon, polyethylene glycol) by methods known to those familiar to the art in a manner that will minimize the binding of analyte(s), thus minimizing carryover.

### Fluidic Valves

In accordance with various embodiments of the invention, fluidic valves in the fluidic circuit 104 are actuated to reverse direction of flow across the chromatography matrix 102. Typically, the flow across the matrix 102 needs to be reversed twice for each sample output from the matrix 102 - the complex mixture 102 is first loaded onto the matrix 102 in one direction and the analyte(s) are bound but other components (e.g. salts, buffers, detergents, etc.) are not; the flow is then reversed and the analyte(s) are eluted off of the matrix 102 in the opposite direction to which there were loaded and diverted to the analyzer 116 for analysis; and finally, the flow is reversed again in preparation for the next sample. In many fluidic valves used in such microfluidic applications, the flow of liquid through the valve is physically stopped during the time at which the valve is being actuated. Typical electronically actuated valve modules 106 can switch between states in 100 milliseconds or slower. Pneumatically actuated valves may be switched much faster, and may reach actuation times of 30 to 40 milliseconds. This short blockage of flow during the actuation time is not a concern during conventional LC where runs typically last minutes.

However, the blockage of flow becomes a concern at very high throughput rates where the sample throughput time approaches 1 sample/second. Typically, the injection valves that may be used in this system allow for fluidic communication between two ports and have two actuation positions. However, if the valve is adjusted to an intermediate state between the actuation positions, the fluid communication is physically cut and no fluid can pass through the valve. During the actuation procedure there is a finite amount of time as the valve is rotated from one position to the other that the flow of fluid through the valve is cut. The high-pressure pumps that are pushing fluid through the valves continue to operate during this time. The creation of a blockage in flow at the valve during the actuation process results in an increase in the pressure within the fluidic circuit between the valve and the high-pressure pump. If the pressure increase is large enough it will eventually result in a failure of the fluidic system and could result in a leak. With conventional valves systems, the pressure increase is transient and the increase in pressure is not sufficient to actually cause a failure of the fluidic circuit. However, the blockage in the flow will be observed in the baseline of the mass spectrometer signal. Since the impurities in the solvent that result in the background MS signal are eliminated with a blockage in flow, the baseline tends to drop significantly during the valve actuation. When the valve has finished rotating and a fluidic connection is reestablished the increased pressure between the pump and the valve is released and a higher than normal flow of solvent is delivered to the mass spectrometer. This results in an increased amount of impurities entering the mass spectrometer and an increase in the background signal. If this event overlaps with analyte signal it can lead to unsymmetrical peaks, distorted baselines, and generally poor quantification.

Ideally, the reversal of flow occurs at such a speed that there is no detectable disturbance in the flow rates and pressures during the flow switching operation. A valve module 106 capable of 100 millisecond actuation times employed in an application where a sample throughput of one sample per second is being performed means that the flow to the analyzer 116 will be physically blocked for 200 milliseconds per second, or 20% of the overall sample analysis time. In various embodiments of the invention, a valve module 106 utilizing, without limitation, pneumatic valves capable of actuation speeds faster than 100 milliseconds, and preferably on the order of 30 milliseconds or less are utilized.

An additional advantage of the above-described embodiments over conventional systems is that the fluidic circuit is arranged such that the same solvent is always delivered to the mass spectrometer. Even when doing a step elution, the elution solvent is the only solution that is sprayed in to the mass spectrometer. While the wash solution containing the mass spectrometer incompatible components of the reaction mixture is diverted to waste, elution solvent is sprayed in to the mass spectrometer inlet. In this manner a stable API spray is always maintained and variations is baseline due to different background signals from wash and elution solutions is eliminated. Some advanced conventional systems divert the wash solution away from the MS inlet to avoid a buildup of non-volatile compounds in the source region. However, it can take several seconds to reestablish a stable spray in the MS inlet when the elution solvent is diverted to the MS. If the sample signal overlaps with this region of unstable spray it can lead to problems with peak symmetry, baseline stability and poor quantification.

### Software

Software used to analyze the data generated by the analyzer 116, which may be executed by the controller 125 or another processor, is of critical importance in a high throughput analysis. For example, the mass spectrometer output at the end of a long analysis at high throughput consists of a series of data point in which time versus intensity values are recorded at each mass channel being analyzed. If plotted in a Cartesian coordinate system, these graphs result in a chromatogram made up of a series of peaks, wherein an integration of the area under each peak can be correlated to the concentration of the sample that was analyzed.

This integration event can be coupled to the switching of various valves in the fluidic circuit 104, in accordance with one embodiment of the invention. The time that a valve was actuated to back-elute the sample from the chromatography matrix into the mass spectrometer (or other analyzer) can be precisely recorded. It is known that until this event takes place no analyte(s) can be delivered to the mass spectrometer. Upon actuation of the valve, the mass spectrometer signal from the analyte(s) being back eluted from the chromatography matrix can be observed. The valve actuation time and the beginning of a mass spectrometer peak can be accurately mapped to one another in time, such that the peak integration algorithm consists of an integration of the mass spectrometer signal for a selected time period after each valve actuation. Even those samples that contain no detectable analyte(s) can be accurately analyzed in this manner since an identical signal window is monitored and integrated in each and every case.

In some cases, an error in the fluidic circuit 104 may lead to no signal being seen in the mass spectrometer. An example of such an error could be a fluidic reservoir in which no sample was present. This would lead to air being injected on to the column 225 rather than an aliquot of sample. In such a case, only baseline signal would be detected for all analytes. Since the final quantification relies on a relative measurement (i.e.: substrate versus product or analyte versus an internal standard) such an error can be easily detected. If the sum of the two or more analyte signals is below a certain threshold, that sample can be flagged as an error.

### Multiplexing

In various embodiments of the invention, the time required for rapid chromatography and inter-sample washing is much larger than the sample peak width (at half-height) at the output of the matrix. In such embodiments, there may be several seconds of baseline mass spectrometer (or other analyzer) signal before the next sample to be analyzed is delivered to the mass spectrometer. This period is effectively a loss in productivity, since the mass spectrometer is not actively quantifying samples.

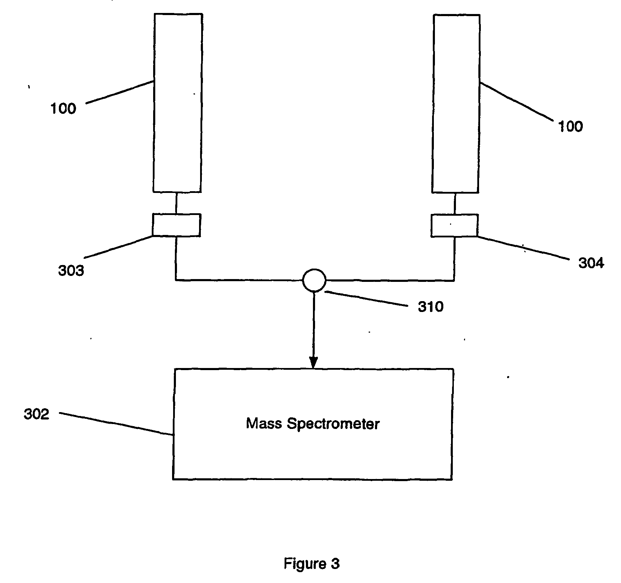

Because mass spectrometers are large footprint instruments that require a significant capital expense, two or more high throughput mass spectrometry interfaces 303 and 304 are used to feed samples to a single mass spectrometer 302, as shown in Fig. 3 in accordance with one embodiment of the invention. Each mass spectrometry interface 303 and 304 may include, without limitation, a rapid chromatograph system 100 described above. A selection valve 310 is placed between the plurality of high throughput mass spectrometry interfaces 303 and 304 and the mass spectrometer 302. When a sample from a given high throughput mass spectrometry interface 303 or 304 is ready to be analyzed, the selection valve 310 is used to direct that sample to the mass spectrometer 302 while the remaining interfaces 303 or 304 are diverted to waste. By staggering the sample delivery to the mass spectrometer 302 such that while one interface is being actively analyzed the others are in the washing or sample acquisition steps, a plurality of interfaces 303 and 304 can be used on a single mass spectrometer 302, allowing throughput to be maximized.

### Auto-injection Device

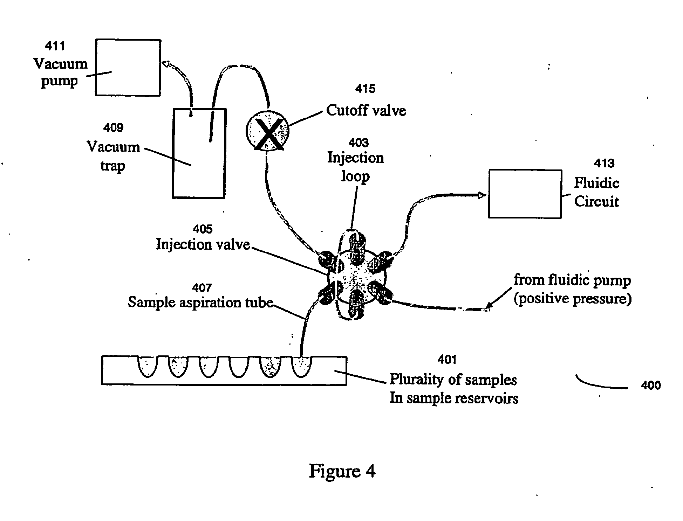

Fig. 4 is a schematic of an auto-injection device 400 that includes a single injection valve 405, in accordance with one embodiment of the invention. The auto-injection device 400 may be used in combination with additional valves as in the above-described embodiment, and may be used to transfer samples from a sample reservoir to, without limitation, a fluidic circuit that may include an analyzer and/or a chromatography column.

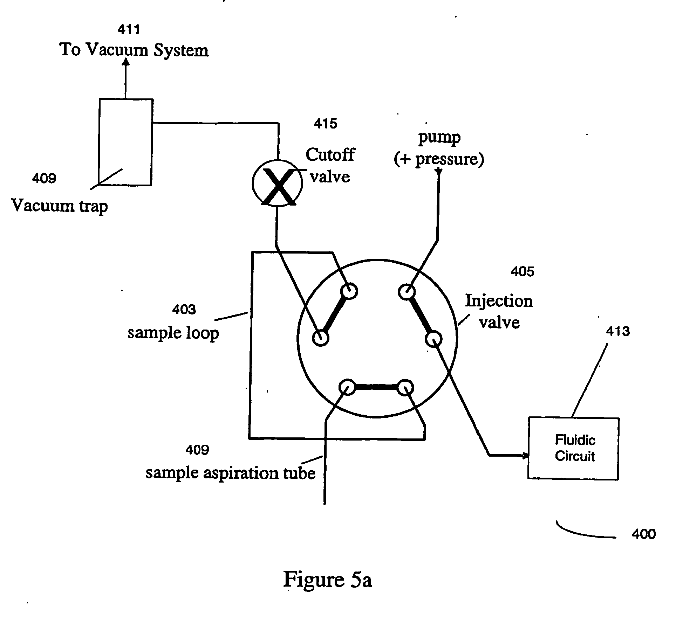

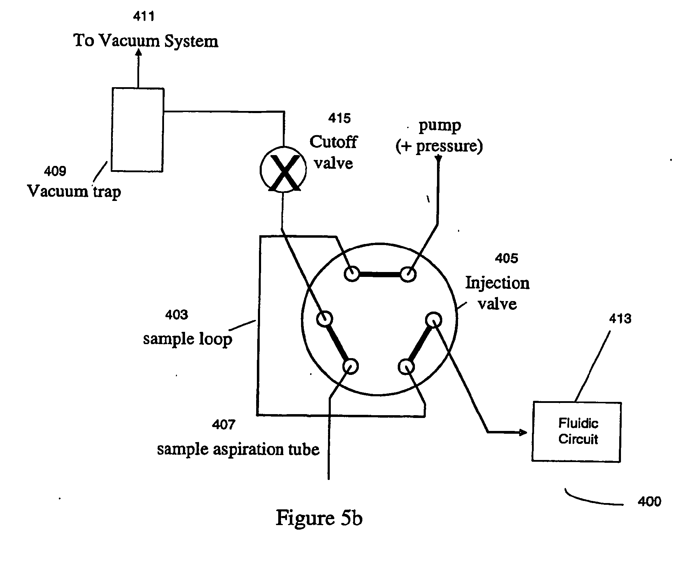

As shown in more detail in Fig. 5(a), and similar to valve 206 in Figs. 2(a-b), when the injection valve 405 is in a first position, (e.g. not activated), a source of reduced pressure 411 is used to aspirate a sample 401 through sample sipper tube 407 and into a sample loop 403. Upon actuation of the injection valve 405, the sample is introduced to a fluidic circuit 413 by applying increased pressure, as shown in Fig. 5(b). To clean the sipper tube 407 prior to deactivation of valve 405 and aspiration of the next sample, the aspirator tube 405 may be dipped into a wash solvent or buffer solution, with reduced pressure applied to aspirate wash solvent through the aspirator tube 104 and into trap 109. Thus, the combination of the constant negative pressure and the in-line trap eliminates the need for repetitive aspiration and dispensing of wash solution through a syringe.

Where an excess of sample is available, the reduced pressure source 411 may be, without limitation, a vacuum pump that is capable of applying a continuous vacuum to the distal end of the sample sipper tube 407. When a large enough volume of sample 401 has been aspirated into the sample loop 403 to fill it completely, the injection valve 405 is actuated and the sample is output to the fluidic circuit 413. The trap 409, located between the injection valve 405 and the vacuum pump 411 is used to collect excess sample. Changing the injection volume can be accomplished by changing the length of the sample loop 403.

However, in cases where an excess of sample 401 is not available or the sample is too valuable to expend, a metered amount of sample 401 may be aspirated into the injection valve 405. In a preferred embodiment of the injection, this metering is performed through the use of a cut-off valve 415 located between the vacuum pump 411 and the injection valve 405. In preferred embodiments, the cutoff valve 415 is a solenoid valve with very rapid response times allowing for accurate and precise actuation in the millisecond timescale. The cutoff valve 415 may be used to aspirate an aliquot of sample into the sample loop 403 through the sipper tube 407 for a very precise and controlled amount of time. The volume of sample aspirated into the sample loop 403 can be precisely calibrated based on the diameters of the sample loop 403, sample sipper tube 407, and the timing of the cutoff valve 415. The longer the cutoff valve 415 is kept in the open position, the longer the aspiration of the sample and the larger the volume of sample aspirated into the injection valve 405.

In accordance with another embodiment of the invention, the continuous vacuum system may be replaced with a piston device in fluid communication with the injection valve 403, particularly in cases where a cutoff valve 415 is impractical, or where the plurality of samples to be analyzed has large differences in viscosity. Changes in viscosity may cause changes in the rate of sample aspiration. The amount of sample aspirated into the sample loop 403 can be metered, for example, by controlling the distance the piston is withdrawn within a cylinder. A sufficient time is allocated to the aspiration process to permit the entire metered amount of sample to be loaded into the sample loop 403. Imprecision in injection volumes due to differences in rates of aspiration caused by sample viscosity can thus be eliminated. The sample is aspirated directly into the sample loop 403 and then injected into the fluidic system. There is no need to apply positive pressure from the piston until it has reached the end of its traverse within the cylinder.

In other embodiments of the invention, various combinations of the above-described approaches for aspirating sample into the injection loop through the sipper tube may be used. For example, a selection valve may be used to select whether a cutoff valve in combination with a continuous vacuum source, or alternatively, a piston device, is placed in fluid communication with the injection valve. Where an excess of sample is available, the selection valve is operated so as to place the cutoff valve and continuous vacuum in fluid communication with the injection valve, with the cutoff valve left in the open position. If the aspiration of the sample must be metered either the cutoff valve can be activated as described above, or the selection valve can be actuated to use the piston-based aspiration system.

The auto-injection device 400 is advantageous over conventional auto-injectors for several reasons. By directly aspirating the sample into the injection loop rather than into a transfer syringe, the computer controlled robotic motion required for each injection is reduced. In conventional auto-injector systems, the transfer syringe must first be moved into the sample reservoir to aspirate an aliquot of sample. Next the transfer syringe must be moved to the injection valve and the aliquot of sample loaded into the injection loop. After the injection, the syringe must be moved yet another time to one or more cleaning stations. Because the current invention aspirates the sample directly into the injection loop, the need to move the transfer syringe from the sample reservoir to the injection valve is eliminated. Minimizing robotic movement within the device both increases the throughput and the reliability of the system. By repeatedly aspirating and injecting from the same sample, larger sample volumes may be analyzed without undue delay. If the injection is to a chromatographic resin, multiple aliquots of sample may be added to the column prior to additional steps of washing and eluting.

Another advantage of the current invention is realized in the cleaning of the auto-injector between samples. All surfaces that come into contact with sample generally must be thoroughly cleaned before the next sample can be injected. In conventional auto-injectors, this includes the injection valve as well as the transfer syringe. Cleaning of the transfer syringe can be especially challenging and time consuming, especially if a standard syringe is used. Because most syringes are manufactured from glass and stainless steel, certain samples are particularly difficult to remove. Many lipophilic compounds tend to adhere strongly to stainless steel and can lead to sample carryover or leaching. Transfer syringes typically have tubing of various diameters and are composed of multiple materials (e.g., glass and stainless steel) that are more difficult to clean than continuous and smooth bio-inert tubing. Since the current invention aspirates samples directly into the injection valve through an sipper tube, there is no transfer syringe to clean. This has the double impact of decreasing sample carryover while also increasing the throughput of the device.

Of importance to minimizing sample carryover is the choice of material used for the sipper tube. In a preferred embodiment of the invention, a concentric tube injector is used to provide the ability to pierce sealed sample reservoirs without the need to have the sample come into contact with materials such as stainless steel that are not chemically compatible with a wide range of samples, as described in copending U.S. Patent Application Serial 10/821,124, filed April 8, 2004, entitled "Concentric Tube Microplate Autosample Interface, which is herein incorporated by reference, in its entirety.

As described above, cleanup of the device can be achieved by simply aspirating a large volume of fluid through the sipper tube 407 while the sample of interest is being diverted to the fluidic circuit for analysis, as shown in Fig. 5(b). The use of biocompatible materials coupled with the small surface area of the sipper tube and injection valve that needs to be cleaned allows for very efficient reduction of sample carryover while maintaining a rapid throughput.

The following are examples, without limitation, of high-throughput sampling using various configurations of the above-described embodiments.

### Example 1: Drug-drug interaction (DDI) assay

Many xenobiotic compounds are metabolized *in vivo* by a family of enzymes known as cytochrome P-450s, primarily in the liver. The metabolic activity by P-450 enzyme also includes a vast majority of small molecule pharmaceuticals. Since the therapeutic activity of many pharmaceutically active compounds is highly dose-dependent it is advantageous to understand the metabolic fate of these chemicals. In many cases, high doses of certain chemicals can be toxic or have long-term deleterious effects.

Many compounds are known to affect the metabolism of certain P-450 enyzmes, either acting as inhibitors or activators. This is true for a range of chemicals that are currently used as therapeutics. It is critical to know from a drug-safety standpoint whether or not the metabolic profile of a pharmaceutical compound taken by an individual may be affected by other chemicals that individual may be taking. If an individual is currently taking a certain drug that inhibits the action of a specific P450 enzyme, taking a second drug that is also metabolized by the same P450 enzyme can have catastrophic consequences. The inhibitory effect of the first drug on the P450 enzyme can lead to the second drug not being metabolized at the predicted rate and result in much higher than expected *in vivo* concentrations. In some cases this can be toxic or even fatal.

To study the possible effects of potential new pharmaceutical compounds a series of *in vitro* assays known as the drug-drug interaction assays have been developed and are familiar to those skilled in the art. The assays use various preparations of P450 enzymes, either as purified recombinant proteins, or as various cellular or sub-cellular (e.g.: microsomes, S9 fractions, etc.) preparations of liver tissue. The enzyme preparations are allowed to react with known substrates of the P450 enzymes, known as probes, under controlled conditions in the presence of the test compounds. If the test compound is active in the assay it will cause a shift in the expected metabolism of the probe molecule. A wide range of different probes and assays has been described in the scientific literature. These formats include both optically active probes typically used with recombinant enzyme preparations and mass spectrometric approaches that facilitate the use of subcellular liver preparations and highly selective and specific probes. While the throughput of optical assays can be very high, researchers generally prefer to perform mass spectrometry-based assays since more biologically relevant data can be obtained.

The above-described embodiments of the invention can be used to vastly improve the throughput of mass spectrometry-based drug-drug interaction assays. An assay to test the activity of test compounds against cytochrome P450-2D6 (CYP2D6) was performed in a 96-well microtiter plate. A microsomal preparation from human liver tissue was incubated in the presence of dextromethorphan, the test compound, and NADPH in a buffer containing potassium phosphate at pH 7.4 and magnesium chloride. After a 30 minute incubation the reaction was quenched by acidifying the reaction with the addition of 10% (v/v) 0.1 % formic acid. While the human liver microsomes have a variety of different enzymes, dextromethorphan is a specific substrate of CYP2D6 and is metabolized into dextrorphan. While the remaining dextromethorphan substrate and the dextrorphan product formed in the reaction can be quantified by the use of conventional liquid chromatography-mass spectrometry at throughputs that is on the order of minutes per sample, the above-described embodiments of the invention allow similar analysis to be performed on the order of 5 seconds.

In accordance with an embodiment of the invention, and referring to Figs. 2(a-c), the sipper tube 204 attached to the valve 206 is moved relative to the first sample to be analyzed in the 96-well microtiter plate. The distal end of the sipper 204 is immersed into the reaction buffer and an aliquot is aspirated into a 5.0 microliter injection loop 208 through the use of a vacuum 221 applied to the distal end of the sipper tube 204. 50 milliseconds after aspiration has begun enough fluid has been aspirated into the valve 206 to completely fill the 5.0 microliter injection loop 208. At this time the injection valve 206 is actuated and the sample in the loop 208 is brought into fluid communication with the output from a high-pressure fluidic pump 222 that pushes the 5.0 microliter sample aliquot through the injection loop 208 and onto a chromatographic column 225 containing an insoluble matrix. The matrix consists of impermeable beads that are an average of 40 microns in diameter. The surface of each bead has been derivatized with a 4-carbon long alkane chain to create a hydrophobic environment. Porous frits constrain the insoluble matrix beads within the column 225, however, the nature of the particles allows for fluid to freely move around and between the particles without an unacceptably high increase in pressure.

The high-pressure fluidic pump 222 is used to pump water at a flow rate of 1.2 milliliters per minute. When the sample reaches the column 225 the dextrorphan and dextromethorphan analytes, being lipophilic molecules, interact with the insoluble matrix beads within the column and are adsorbed onto the column 225. Compounds in the reaction buffer that interfere with mass spectrometry, including the potassium phosphate buffer, magnesium chloride salts, NADPH and NADP, are highly hydrophilic so they are flushed through the column into a waste container. Insoluble components in the assay buffer that may have been aspirated along with the sample are small enough to move through the space between the 40 micron beads and are also removed from the analytes.

The total internal volume of the column 225 is 4.0 microliters. To remove the interfering salts at an acceptable level it is necessary to flush the column with several volumes of water. At a flow rate of 1.2 milliliters per minute, a total of 20 microliters of water per second is pumped. Therefore in the one-second wash, a total of 5 column volumes of water were pumped over the bed of matrix to remove the mass spectrometry incompatible components.

During this entire process a second fluidic pump 223 is used to pump a solution of 80% acetonitrile in water at a flow rate of 1.0 milliliters per minute directly on to a triple quadrupole mass spectrometer 240 operating in the electrospray ionization (ESI) mode. The mass spectrometer 240 was optimized to specifically monitor the dextrorphan and dextromethorphan analytes in multiple reaction monitoring (MRM) mode. A stable ESI flow was maintained and a constant baseline from the 80% acetonitrile solution was established. Exactly 1.0 seconds after the valve 222 to push the sample from the injection loop onto the matrix, the second valve 207 was actuated. This valve 207 forces the 80% acetonitrile to enter the column 225 from the direction opposite that from which the sample was loaded. Simultaneously, the output of the first pump 222 was diverted away from the column and to waste. The second valve 207 actuation brought the column 225 into fluidic contact with the second pump 223 and the analytes adsorbed on the column 225 were eluted by the 80% acetonitrile and pushed into the ESI source of the mass spectrometer 240 where they are analyzed. The two analytes were eluted simultaneously and analyzed in the mass spectrometer based on their mass to charge ratios.

Since the elution step is done in the opposite direction of the loading step, the analytes never travel through the column 225. This is an important point, since fluid traveling over a column 225 tends to undergo turbulence that can result in mixing and linear diffusion. Minimizing the linear diffusion is very important since this leads to an increase in the volume of fluid in which the sample is presented to the mass spectrometer. Best analytical data is obtained when the sample is presented in the smallest possible elution volume in the shortest amount of time. Small elution volumes lead to high local concentrations of analyte and a correspondingly high signal level that can be distinguished from the background signal and shot noise. In 1.5 seconds at a flow rate of 1.0 milliliters per minute a total of 25 microliters of elution fluid was pushed over the column 224. This corresponds to over 6 column volumes of elution fluid, more than enough to flush the column and eliminate carryover to the next sample.

At this time both valves 222 and 207 were actuated again to their starting positions. The injection loop 208 was available to aspirate the next sample, the 80% acetonitrile from the second high pressure pump 223 was diverted away from the column 225 and directly to the mass spectrometer 240 and the water from the first high pressure pump 222 was pushed over the column 225 in the original direction. This state was maintained for a minimum of 2 column volumes to (a minimum of 400 milliseconds) to allow the local environment within the matrix of the column 225 to be flushed with water to allow binding of the analytes in the next sample. This process is known as column equilibration and must be performed in sufficient time to allow proper analysis. After the equilibration of the column 225 the next sample was ready for analysis.

While the sample was being analyzed 80% acetonitrile from a reservoir was aspirated through the sipper tube 204 to remove any contamination in the sipper tube and to eliminate carryover into the next sample. In this manner samples were analyzed at a periodic rate of 5 seconds per sample. It is also possible to analyze more than two analytes simultaneously and therefore to multiplex assays for multiple P450 isoforms.

### Example 2: Metabolic Stability Assay

In accordance with various embodiments of the invention, certain attributes of the system may be advantageously enhanced at the expense of throughput. An example of such an application is the metabolic stability assay. The metabolic stability assay assesses the activity of liver enzymes on a test molecule. It is typically an *in vitro* assay performed by incubating a sub-cellular liver preparation (e.g.: liver microsomes or S9 fraction) with a source of energy (e.g.: NADPH) and the test compound in an appropriate buffer system. The liver enzymes may metabolize the test compound, the rate of which can be determined by quantifying the amount of the test compound at controlled times using mass spectrometry.

This assay is different from the DDI assay in that each and every test compound must be monitored in the mass spectrometer. In the DDI assay, only a specific set of probes needed to be monitored allowing for a full optimization of the system. Given that a very wide range of test compounds needs to be analyzed in the metabolic stability assay, generic methods capable of analyzing many different chemical structures are required. In this application, the throughput of the system is lowered slightly to facilitate the analysis of a wider range of analytes.

To perform the metabolic stability assay, a different approach than the DDI assay is used. The reverse elution (i.e., eluting the analytes from the column in the opposite direction to which it was loaded onto the column) is not used. Rather, the analytes are eluted from the column in the same direction as they were loaded on to the column. This results in linear diffusion as the analytes experience turbulent flow as they are pushed over the insoluble matrix beads, causing a broader peak and therefore lower throughput. However, many of the aspects of the invention used in the DDI assay can still be applied to the assay and result in a significantly increased throughput over conventional methods without a sacrifice in the sensitivity of the assay. These advantages will be described in detail below.

The sample aliquot is aspirated into an injection loop and loaded onto the column in the same manner as in the DDI assay with a first high-pressure pump that is used to pump a wash solution. This solution is typically water or an aqueous buffer and is used to flush out the salts, buffer components, NADPH and insoluble components of the reaction mixture to a waste container. During this time a second high pressure pump is used to pump an elution solvent in to the ESI or APCI source of the mass spectrometer. When the second valve is actuated, the elution fluid is forced over the column in the same direction that the analytes were loaded on to the column. An elution fluid that is capable of dissolving a very wide range of chemicals but is compatible with atmospheric pressure ionization mass spectrometry is used. These buffers may include alcohols (e.g.: methanol, ethanol, or isopropanol), acetonitrile, acetone, tetrahydrofuran or mixtures of these solvents. It is generally desirable to have a small amount of water in the mixture, and additives such as ammonium acetate, ammonium carbonate, or DMSO to the elution solution may result in sharper peaks.

If the mass spectrometric characteristics of the analytes of interest are previously known, the mass spectrometer can be set up to specifically monitor those compounds in MRM mode. However, if no previous information is available about the analytes, it may be desirable to use a mass spectrometer to scan a range of masses. The use of a time-of-flight, ion trap, hybrid quadrupole/ion trap, or hybrid quadrupole/time-of-flight mass spectrometer can facilitate the scanning of a wide range of masses with minimal loss in signal intensity. To obtain good quantitative data an internal standard is added upon the quenching of the reaction and the signal from the analyte(s) is normalized with respect to the internal standard.

The current invention uses a step-elution system to purify samples using column chromatography and analyses them using mass spectrometry. However, the system uses a significant improvement over conventional step elution systems: the same solvent system (the elution solution) is always sprayed into the inlet of the mass spectrometer. In conventional systems, as the wash and elution solutions are alternated for each sample and the two different solutions are alternately sprayed in to the mass spectrometer inlet. This can have a huge impact on the baseline signal observed. The variation is baseline signal may have a significant impact on the quantification of peaks, particularly those that have a low level of signal.

In some of the more advanced conventional systems the wash solution is diverted away from the mass spectrometer inlet to a waste container and only the elution solution is sprayed into the mass spectrometer. However, this also results in a change in the background signal seen in the mass spectrometer since there is no flow during the column loading and washing stages. Furthermore it may take several seconds to reestablish a stable spray in the MS inlet. In a high throughput system such as described here, the leading edge of the analyte peak may overlap with the region of unstable flow resulting in poor sensitivity, uneven peak shape and increased error in quantification.

A further improvement the current invention provides over conventional systems is in the fast switching valves. Typical electronically actuated valves provide switching times over 100 milliseconds. However the very fast valve switching (e.g.: 50 milliseconds or less) employed in the current invention allows for a pulse-free spray in the mass spectrometer providing symmetrical peaks with flat baselines and facilitates accurate quantification.

### Example 3: Compound purity testing

In some applications the samples to be analyzed are already in a buffer that is compatible with mass spectrometry. Such an application may be the quality control analysis of test compounds in an aqueous or organic buffer that can directly be sprayed in to an API source without the need for any purification. Various aspects of the above-described embodiments can be used to increase the sample throughput for such an application.

In this application only a single injection valve is used. An aliquot of sample is aspirated into the injection loop and upon actuation of that valve the sample is sprayed directly in to the mass spectrometer. The flow from a single fluidic pump is used to push the sample through the injection loop and into the inlet of the mass spectrometer. In preferred embodiments of the invention, the fluid used to push the sample on to the mass spectrometer is one that the analytes are highly soluble in and provides good ionization in the mass spectrometer inlet. These solutions may include alcohols (e.g.: methanol, ethanol, or isopropanol), acetonitrile, acetone, tetrahydrofuran or mixtures of one or more of these solvents with water.

The system provides increased throughput over conventional systems through several means. The elimination of a transport syringe to move a sample aliquot from a reservoir to the injection valve increases the overall speed of the robotics. The injection valve and the sample reservoir may be moved relative to each other such that an aliquot of sample can be directly aspirated in to the injection loop. Besides facilitating faster robotics, this also eliminates the need to clean the transport syringe between injections. In conventional systems both the transport syringe and the injection loop need to be thoroughly cleaned between samples. However, in the current invention there is no transport syringe. ,

Samples that do not need to be purified have been analyzed by atmospheric pressure ionization at throughputs of approximately 1 second per sample using the system with minimal carryover between samples.

In various embodiments, the disclosed system and method may be implemented as a computer program product for use with a computer system. Such implementation may include a series of computer instructions fixed either on a tangible medium, such as a computer readable media (e.g., a diskette, CD-ROM, ROM, or fixed disk) or transmittable to a computer system, via a modem or other interface device, such as a communications adapter connected to a network over a medium. Medium may be either a tangible medium (e.g., optical or analog communications lines) or a medium implemented with wireless techniques (e.g., microwave, infrared or other transmission techniques). The series of computer instructions embodies all or part of the functionality previously described herein with respect to the system. Those skilled in the art should appreciate that such computer instructions can be written in a number of programming languages for use with many computer architectures or operating systems. Furthermore, such instructions may be stored in any memory device, such as semiconductor, magnetic, optical or other memory devices, and may be transmitted using any communications technology, such as optical, infrared, microwave, or other transmission technologies. It is expected that such a computer program product may be distributed as a removable media with accompanying printed or electronic documentation (e.g., shrink wrapped software), preloaded with a computer system (e.g., on system ROM or fixed disk), or distributed from a server or electronic bulletin board over the network (e.g., the Internet or World Wide Web).

Although various exemplary embodiments of the invention have been disclosed, it should be apparent to those skilled in the art that various changes and modifications can be made which will achieve some of the advantages of the invention without departing from the true scope of the invention.

## Claims

1. A method of high throughput sample preparation and analysis, the method comprising:
utilizing a valving module (106) to perform the steps of:
(a) initiating and maintaining a flow of elution fluid to a mass spectrometer (116), while passing a fluid over a chromatography column including an insoluble matrix (102) in a first direction (109), the fluid including an analyte that binds to the insoluble matrix;
(b) back-eluting the elution fluid over the insoluble matrix (102) in a second direction (111) opposite the first direction to deliver a sample that includes the analyte to the mass spectrometer (116); and
(c) repeating the steps of (a) passing the fluid, and (b) back-eluting the elution fluid and delivering the sample, so as to output a plurality of samples at a periodic rate, thereby maintaining a continuous flow of fluid to the mass spectrometer (116).

2. The method according to claim 1, wherein the periodic rate is 30 seconds/sample or faster.

3. The method according to claim 1, further comprising analyzing each sample.

4. The method according to claim 1 wherein back-eluting includes actuating the valving element (106) to initiate flow of the elution fluid over the insoluble matrix (102), the method further including integrating an output of the mass spectrometer for a predetermined time after the valve is actuated to determine a characteristic of the sample.

5. The method according to claim 1, further comprising passing wash solution over the chromatography matrix (102) prior to back-eluting the elution fluid.

6. The method according to claim 1, further comprising passing wash solution over the insoluble matrix (102) prior to passing the fluid that includes the analyte over the insoluble matrix (102).

7. The method according to claim 1, further comprising aspirating the fluid from a fluid source prior to passing the fluid over an insoluble matrix (102).

8. The method according to claim 1, further including packing the insoluble matrix (102) in a column format.

9. A system for high throughput sample preparation and analysis, the system comprising:
a chromatography column including an insoluble matrix (102);
a fluidic circuit (104) including a valving module (106) having an actuation time of faster than 100 milliseconds, the valving module (106) configured for alternatively passing a fluid over the insoluble matrix in a first direction (109) such that an analyte in the fluid binds to the insoluble matrix while continuously flowing the elution fluid to a mass spectrometer (116), and back-eluting an elution fluid over the insoluble matrix in a second direction (111) opposite the first direction to deliver a sample that includes the analyte to the mass spectrometer (116); and
a controller (125) for controlling the fluidic circuit to periodically perform the steps of passing the fluid over the insoluble matrix and back-eluting the elution fluid over the insoluble matrix to deliver a plurality of samples at a periodic rate thereby continuously flowing the elution fluid to the mass spectrometer (118).

10. The system according to claim 9, wherein the periodic rate is 30 seconds/sample or faster.

11. The system according to claim 9, wherein the valving module (106) includes at least one pneumatically actuated valve.

12. The system according to claim 9, wherein the valving module (106) is electromechanical.

13. The system according to claim 9, wherein the mass spectrometer outputs a signal representative of the one or more samples.

14. The system according to claim 13, wherein the mass spectrometer includes an atmospheric ionization mass spectrometry source chosen from the group of sources consisting of an electrospray ionization mass spectrometry source, an atmospheric pressure chemical ionization source, and an atmospheric pressure photoionization source.

15. The system according to claim 13, wherein the fluidic circuit (104) includes a valve module (106) that is actuated to back-elute the elution fluid over the insoluble matrix (102), and wherein the controller (125) integrates the signal for a predetermined time after the valve module is actuated to determine a characteristic of the sample.

16. The system according to claim 15, wherein the controller (125) indiscriminately uses the signal for the entire predetermined time after the valve module (106) is actuated to determine a characteristic of the sample.

17. The system according to claim 9, wherein the fluidic circuit (104) includes tubing having a diameter between 20 µm to 300 µm.

18. The system according to claim 17, wherein the fluidic circuit (104) includes channels in a microfluidic biochip having a diameter between 20 µm to 300 µm.

19. The system according to claim 9, wherein the fluidic circuit (104) includes one or more surfaces which contact the fluid, and wherein each surface is bioinert.

20. The system according to claim 19, wherein each surface is a material chosen from the group of materials consisting of poly ether ether ketone, polyimide, polytetrafluoroethylene titanium, and titanium alloy.

21. The system according to claim 9, wherein the fluidic circuit (104) includes a fluidic pathway made of steel coated with a material to minimize binding with the analyte.

22. The system according to claim 21, wherein the material is chosen from the group of materials consisting of polytetrafluoroethylene and polyethylene glycol.

23. The system according to claim 9, wherein the fluidic circuit (104) includes an aspirator for aspirating an aliquot of the fluid to be passed over the insoluble matrix.

24. The system according to claim 9, wherein the chromatography column includes a first end and a second end, wherein the analyte enters and exits the chromatography column at the first end.

25. A computer program product for use on a computer system for controlling a high throughput system including a fluidic circuit (104) in fluid communication with a chromatography column including an insoluble matrix (102), the fluidic circuit including a valving module (106) having an actuation time of faster than 100 milliseconds, the computer program product comprising a computer usable medium having computer readable program code thereon, the computer readable program code including:
program code for controlling the fluidic circuit (104) to initiate and maintain a flow of elution fluid to a mass spectrometer (116);
program code for controlling the fluidic circuit (104) to pass a fluid over the insoluble matrix (102) in a first direction (109) such that an analyte in the fluid binds to the insoluble matrix, while the flow of elution fluid to the mass spectrometer is maintained;
program code for controlling the fluidic circuit (104) to baclc-elute the elution fluid over the insoluble matrix (102) in a second direction opposite the first direction to deliver a sample that includes the analyte to the mass spectrometer (116); and
program code for repeating the passing of the fluid, and the back-eluting the elution fluid and delivering the sample, so as to output samples at a periodic rate, thereby maintaining a continuous flow of elution fluid to the mass spectrometer (116).

26. The computer program product according to claim 25, wherein the periodic rate is 30 seconds/sample or faster.

27. The computer program product according to claim 25, wherein the computer program code for controlling the fluidic (104) circuit to back-elute the elution fluid includes program code for actuating a valve module (106) that allows the elution fluid to flow through the chromatography column in the second direction.

28. The computer program product according to claim 25, wherein the mass spectrometer analyzes the sample, and wherein the computer program product further includes program code for integrating an output of the mass spectrometer upon actuation of the valve module (106) to determine a characteristic of the sample.

## Patentansprüche

1. Verfahren zur Hochdurchsatz-Probenpräparation und Analyse, wobei das Verfahren umfasst:
Verwenden eines Ventilmoduls (106) zur Durchführung der Schritte:
(a) Beginnen und Halten eines Stromes einer Elutionsflüssigkeit zu einem Massenspektrometer (116), während eine Flüssigkeit in einer ersten Richtung (109) über eine Chromatographiesäule, die eine unlösliche Matrix (102) enthält, geleitet wird, wobei die Flüssigkeit einen Analyten enthält, der an die unlösliche Matrix bindet;
(b) Rückeluieren der Elutionsflüssigkeit über die unlösliche Matrix (102) in einer zur ersten Richtung entgegen gesetzten zweiten Richtung (111), so dass eine Probe, die den Analyten umfasst, zum Massenspektrometer (116) geführt wird; und
(c) Wiederholen der Schritte (a) Leiten der Flüssigkeit und (b) Rückeluieren der Elutionsflüssigkeit und Zuführen der Probe, so dass eine Anzahl von Proben mit einer periodischen Rate ausgegeben wird, wodurch ein kontinuierlicher Strom der Flüssigkeit zu dem Massenspektrometer (116) aufrecht erhalten wird.

2. Verfahren nach Anspruch 1, wobei die periodische Rate 30 Sek./Probe oder schneller ist.

3. Verfahren nach Anspruch 1, das zudem das Analysieren jeder Probe umfasst.

4. Verfahren nach Anspruch 1, wobei das Rückeluieren das Betätigen des Ventilelementes (106) beinhaltet, so dass der Strom der Elutionsflüssigkeit über die unlösliche Matrix (102) begonnen wird, wobei das Verfahren zudem die Integration eines Ausgangs des Massenspektrometers für einen festgelegten Zeitraum umfasst, nachdem das Ventil betätigt wurde, so dass eine Eigenschaft der Probe bestimmt wird.

5. Verfahren nach Anspruch 1, bei dem vor dem Rückeluieren der Elutionsflüssigkeit zudem Waschlösung über die Chromatographie-Matrix (102) geleitet wird.

6. Verfahren nach Anspruch 1, bei dem vor dem Leiten der Flüssigkeit, die den Analyten enthält, über die unlösliche Matrix (102) zudem Waschlösung über die unlösliche Matrix (102) geleitet wird.

7. Verfahren nach Anspruch 1, bei dem vor dem Leiten der Flüssigkeit über eine unlösliche Matrix (102) zudem die Flüssigkeit aus einer Flüssigkeitsquelle gesaugt wird.

8. Verfahren nach Anspruch 1, bei dem zudem die unlösliche Matrix (102) in ein Säulenformat gepackt wird.

9. System zur Hochdurchsatz-Probenpräparation und Analyse, wobei das System umfasst:
eine Chromatographiesäule, die eine unlösliche Matrix (102) enthält;
einen Flüssigkeitskreislauf (104), der ein Ventilmodul (106) mit einer Betätigungszeit von schneller als 100 Millisekunden aufweist, wobei das Ventilmodul (106) so konfiguriert ist, dass abwechselnd eine Flüssigkeit über die unlösliche Matrix in einer ersten Richtung (109) geleitet wird, so dass ein Analyt in der Flüssigkeit an die unlösliche Matrix bindet, während die Elutionsflüssigkeit stetig zu einem Massenspektrometer (116) fließt, und eine Elutionsflüssigkeit über die unlösliche Matrix in einer zur ersten Richtung entgegen gesetzten zweiten Richtung (111) rückeluiert wird, so dass eine Probe, die den Analyten enthält, zu dem Massenspektrometer (116) geführt wird; und
eine Steuervorrichtung (125) zum Steuern des Flüssigkeitskreislaufes, so dass die Schritte Leiten der Flüssigkeit über die unlösliche Matrix und Rückeluieren der Elutionsflüssigkeit über die unlösliche Matrix periodisch ausgeführt werden, so dass eine Anzahl von Proben mit einer periodischen Rate abgegeben wird, wodurch die Elutionsflüssigkeit stetig zum Massenspektrometer (118) fließt.

10. System nach Anspruch 9, wobei die periodische Rate gleich 30 Sek./Probe oder schneller ist.

11. System nach Anspruch 9, wobei das Ventilmodul (106) mindestens ein pneumatisch betätigtes Ventil umfasst.

12. System nach Anspruch 9, wobei das Ventilmodul (106) elektromechanisch ist.

13. System nach Anspruch 9, wobei das Massenspektrometer ein Signal ausgibt, das ein oder mehrere Proben veranschaulicht.

14. System nach Anspruch 13, wobei das Massenspektrometer eine atmosphärische lonisations-Massenspektrometriequelle umfasst, ausgewählt aus der Gruppe von Quellen, bestehend aus einer Elektrospray-lonisations-Massenspektrometriequelle, einer chemischen Atmosphärendrucklonisationsquelle und einer Atmosphärendruck-Photoionisationsquelle.

15. System nach Anspruch 13, wobei der Flüssigkeitskreislauf (104) ein Ventilmodul (106) aufweist, das so betätigt wird, dass die Elutionsflüssigkeit über die unlösliche Matrix (102) rückeluiert wird und wobei die Steuervorrichtung (125) das Signal für einen festgelegten Zeitraum integriert, nachdem das Ventilmodul betätigt wird, so dass eine Eigenschaft der Probe bestimmt wird.

16. System nach Anspruch 15, wobei die Steuervorrichtung (125) willkürlich das Signal für die gesamte festgelegte Zeit verwendet, nachdem das Ventilmodul (106) betätigt wurde, so dass eine Eigenschaft der Probe bestimmt wird.

17. System nach Anspruch 9, wobei der Flüssigkeitskreislauf (104) Röhrchen mit einem Durchmesser zwischen 20 µm bis 300 µm aufweist.

18. System nach Anspruch 17, wobei der Flüssigkeitskreislauf (104) Kanäle in einem Mikrofluid-Biochip mit einem Durchmesser zwischen 20 µm bis 300 µm aufweist.

19. System nach Anspruch 9, wobei der Flüssigkeitskreislauf (104) ein oder mehrere Oberflächen aufweist, die die Flüssigkeit kontaktieren, und wobei die Oberflächen jeweils biologisch inert sind.

20. System nach Anspruch 19, wobei die Oberfläche jeweils ein Material ist, ausgewählt aus der Gruppe von Materialien, bestehend aus Polyetheretherketon, Polyimid, Polytetrafluorethylen, Titan und Titanlegierung.

21. System nach Anspruch 9, wobei der Flüssigkeitskreislauf (104) einen Flüssigkeitsweg aus Stahl umfasst, der mit einem Material beschichtet ist, das die Bindung an den Analyten minimiert.

22. System nach Anspruch 21, wobei das Material ausgewählt ist aus der Gruppe von Materialien, bestehend aus Polytetrafluorethylen und Polyethylenglycol.

23. System nach Anspruch 9, wobei der Flüssigkeitskreislauf (104) eine Saugvorrichtung zum Ansaugen eines Aliquots der Flüssigkeit umfasst, die über die unlösliche Matrix geleitet werden soll.

24. System nach Anspruch 9, wobei die Chromatographiesäule ein erstes Ende und ein zweites Ende aufweist, wobei der Analyt am ersten Ende in die Chromatographiesäule eintritt und dort austritt.

25. Computer-Programmprodukt zur Verwendung bei einem Computersystem zum Steuern eines Hochdurchsatzsystems, umfassend einen Flüssigkeitskreislauf (104) in Flüssigkeitskommunikation mit einer Chromatographiesäule, die eine unlösliche Matrix (102) umfasst, wobei der Flüssigkeitskreislauf ein Ventilmodul (106) mit einer Betätigungszeit von schneller als 100 Millisekunden aufweist, wobei das Computer-Programmprodukt ein computernutzbares Medium mit einem darauf befindlichen computerlesbaren Programmcode darauf aufweist, wobei der computerlesbare Programmcode umfasst:
Programmcode, der den Flüssigkeitskreislauf (104) zum Beginnen und Aufrechterhalten eines Stroms der Elutionsflüssigkeit zu einem Massenspektrometer (116) steuert;
Programmcode, der den Flüssigkeitskreislauf (104) zum Leiten einer Flüssigkeit über die unlösliche Matrix (102) in einer ersten Richtung (109) steuert, so dass ein Analyt in der Flüssigkeit an die unlösliche Matrix bindet, während die Strömung der Elutionsflüssigkeit zum Massenspektrometer aufrecht erhalten bleibt;
Programmcode, der den Flüssigkeitskreislauf (104) so steuert, dass die Elutions-Flüssigkeit über die unlösliche Matrix (102) in einer zur ersten Richtung entgegen gesetzten zweiten Richtung rückeluiert wird, so dass eine Probe, die den Analyten umfasst, zum Massenspektrometer (116) geführt wird; und
Programmcode, der das Leiten der Flüssigkeit, die Rückelution der Elutionsflüssigkeit und das Abgeben der Probe wiederholt, so dass Proben mit einer periodischen Rate ausgegeben werden, wodurch ein kontinuierlicher Strom der Elutionsflüssigkeit zum Massenspektrometer (116) aufrechterhalten wird.

26. Computer-Programmprodukt nach Anspruch 25, wobei die periodische Rate gleich 30 Sek./Probe oder schneller ist.

27. Computer-Programmprodukt nach Anspruch 25, wobei der Computerprogrammcode zum Steuern des Flüssigkeits-(104)-Kreislaufes zum Rückeluieren der Elutionsflüssigkeit einen Programmcode zum Betätigen eines Ventilmoduls (106) umfasst, der es ermöglicht, dass die Elutionsflüssigkeit in der zweiten Richtung durch die Chromatographiesäule fließt.

28. Computerprogrammprodukt nach Anspruch 25, wobei das Massenspektrometer die Probe analysiert und wobei das Computerprogrammprodukt zudem einen Programmcode zum Integrieren eines Ausgangs des Massenspektrometers beim Betätigen des Ventilmoduls (106) umfasst, so dass eine Eigenschaft der Probe bestimmt wird.

## Revendications

1. Procédé de préparation et d'analyse d'échantillon à haut rendement, le procédé comprenant les étapes consistant à :
utiliser un module de vanne (106) pour effectuer les étapes consistant à :
(a) initier et maintenir un écoulement de fluide d'élution en direction d'un spectromètre de masse (116), tout en faisant passer un fluide sur une colonne de chromatographie incluant une matrice insoluble (102) dans une première direction (109), le fluide incluant un analyte qui se lie à la matrice insoluble ;
(b) rétroéluer le fluide d'élution sur la matrice soluble (102) dans une deuxième direction (111) opposée à la première direction pour délivrer un échantillon qui inclut l'analyte au spectromètre de masse (116) ; et
(c) répéter les étapes consistant à (a) faire passer le fluide, et (b) rétroéluer le fluide d'élution et délivrer l'échantillon, de façon à fournir en sortie une pluralité d'échantillons à une vitesse périodique, maintenant ainsi un écoulement continu de fluide en direction du spectromètre de masse (116).

2. Procédé selon la revendication 1, dans lequel la vitesse périodique est de 30 secondes/échantillon ou plus rapide.

3. Procédé selon la revendication 1, comprenant en outre l'analyse de chaque échantillon.

4. Procédé selon la revendication 1, dans lequel la rétroélution inclut l'actionnement de l'élément de vanne (106) pour initier un écoulement du fluide d'élution sur la matrice insoluble (102), le procédé incluant en outre l'intégration d'une sortie du spectromètre de masse pendant un temps prédéterminé après que la vanne est actionnée pour déterminer une caractéristique de l'échantillon.

5. Procédé selon la revendication 1, comprenant en outre le passage d'une solution de lavage sur la matrice de chromatographie (102) avant rétroélution du fluide d'élution.

6. Procédé selon la revendication 1, comprenant en outre le passage d'une solution de lavage sur la matrice insoluble (102) avant le passage du fluide qui inclut l'analyte sur la matrice insoluble (102).

7. Procédé selon la revendication 1, comprenant en outre l'aspiration du fluide provenant d'une source de fluide avant le passage du fluide sur une matrice insoluble (102).

8. Procédé selon la revendication 1, comprenant en outre le garnissage de la matrice insoluble (102) dans un format de colonne.

9. Système de préparation et d'analyse d'échantillon à haut rendement, le système comprenant :
une colonne de chromatographie incluant une matrice insoluble (102) ;
un circuit fluidique (104) incluant un module de vanne (106) ayant un temps d'actionnement plus rapide que 100 millisecondes, le module de vanne (106) étant configuré pour faire passer alternativement un fluide sur la matrice insoluble dans une première direction (109) de telle sorte qu'un analyte dans le fluide se lie à la matrice insoluble tout en écoulant en continu le fluide d'élution en direction d'un spectromètre de masse (116), et rétroéluer un fluide d'élution sur la matrice insoluble dans une deuxième direction (111) opposée à la première direction pour délivrer un échantillon qui inclut l'analyte en direction du spectromètre de masse (116) ; et
une unité de commande (125) pour commander le circuit fluidique pour effectuer périodiquement les étapes consistant à faire passer le fluide sur la matrice insoluble et rétroéluer le fluide d'élution sur la matrice insoluble pour délivrer une pluralité d'échantillons à une vitesse périodique, écoulant ainsi en continu le fluide d'élution en direction du spectromètre de masse (118).

10. Système selon la revendication 9, dans lequel la vitesse périodique est de 30 secondes/échantillon ou plus rapide.

11. Système selon la revendication 9, dans lequel le module de vanne (106) inclut au moins une vanne actionnée pneumatiquement.

12. Système selon la revendication 9, dans lequel le module de vanne (106) est électromécanique.

13. Système selon la revendication 9, dans lequel le spectromètre de masse fournit en sortie un signal représentatif de l'échantillon ou des échantillons.

14. Système selon la revendication 13, dans lequel le spectromètre de masse inclut une source de spectrométrie de masse à ionisation atmosphérique choisie dans le groupe des sources consistant en une source de spectrométrie de masse à ionisation par électropulvérisation, une source d'ionisation chimique à pression atmosphérique et une source de photoionisation à pression atmosphérique.

15. Système selon la revendication 13, dans lequel le système fluidique (104) inclut un module de vanne (106) qui est actionné pour rétroéluer le fluide d'élution sur la matrice insoluble (102), et dans lequel l'unité de commande (125) intègre le signal pendant un temps prédéterminé après que le module de vanne est actionné pour déterminer une caractéristique de l'échantillon.

16. Système selon la revendication 15, dans lequel l'unité de commande (125) utilise sans distinction le signal pendant le temps prédéterminé entier après que le module de vanne (106) est actionné pour déterminer une caractéristique de l'échantillon.

17. Système selon la revendication 9, dans lequel le système fluidique (104) inclut un tubage ayant un diamètre compris entre 20 µm et 300 µm.

18. Système selon la revendication 17, dans lequel le système fluidique (104) inclut des canaux dans une biopuce microfluidique ayant un diamètre compris entre 20 µm et 300 µm.

19. Système selon la revendication 9, dans lequel le système fluidique (104) inclut une ou plusieurs surfaces qui viennent en contact avec le fluide, et où chaque surface est bioinerte.

20. Système selon la revendication 19, dans lequel chaque surface est un matériau choisi dans le groupe des matériaux consistant en la poly(étheréthercétone), le poly(imide), le polytétrafluoroéthylène, le titane et un alliage de titane.

21. Système selon la revendication 9, dans lequel le système fluidique (104) inclut une voie fluidique constituée d'acier revêtu d'un matériau pour minimiser la liaison avec l'analyte.

22. Système selon la revendication 21, dans lequel le matériau est choisi dans le groupe des matériaux consistant en le poly(tétrafluoroéthylène) et le poly(éthylène glycol).

23. Système selon la revendication 9, dans lequel le système fluidique (104) inclut un aspirateur pour aspirer une aliquote du fluide à faire passer sur la matrice insoluble.

24. Système selon la revendication 9, dans lequel la colonne chromatographique inclut une première extrémité et une seconde extrémité, où l'analyte entre et sort de la colonne chromatographique à la première extrémité.

25. Produit de programme informatique à utiliser sur un système informatique pour commander un système à haut rendement incluant un circuit fluidique (104) en communication fluidique avec une colonne de chromatographie incluant une matrice insoluble (102), le circuit fluidique incluant un module de vanne (106) ayant un temps d'actionnement plus rapide que 100 millisecondes, le produit de programme informatique comprenant un support utilisable par ordinateur sur lequel se trouve un code de programme lisible par ordinateur, le code de programme lisible par ordinateur incluant :
un code de programme pour commander le circuit fluidique (104) pour initier et maintenir l'écoulement de fluide d'élution en direction d'un spectromètre de masse (116) ;
un code de programme pour commander le circuit fluidique (104) pour faire passer un fluide sur la matrice insoluble (102) dans une première direction (109) de telle sorte qu'un analyte dans le fluide se lie à la matrice insoluble, tandis que l'écoulement du fluide d'élution en direction du spectromètre de masse est maintenu ;
un code de programme pour commander le circuit fluidique (104) pour rétroéluer le fluide d'élution sur la matrice insoluble (102) dans une deuxième direction opposée à la première direction pour délivrer un échantillon qui inclut l'analyte en direction du spectromètre de masse (116) ; et
un code de programme pour répéter le passage du fluide, et la rétroélution du fluide d'élution et la délivrance de l'échantillon, de façon à fournir en sortie des échantillons à une vitesse périodique, maintenant ainsi un écoulement continu de fluide d'élution en direction du spectromètre de masse (116).

26. Produit de programme informatique selon la revendication 25, dans lequel la vitesse périodique est de 30 secondes/échantillon ou plus rapide.

27. Produit de programme informatique selon la revendication 25, dans lequel le code de programme informatique pour commander le circuit fluidique (104) pour rétroéluer le fluide d'élution inclut un code de programme pour actionner un module de vanne (106) qui permet au fluide d'élution de circuler à travers la colonne de chromatographie dans la deuxième direction.

28. Produit de programme informatique selon la revendication 25, dans lequel le spectromètre de masse analyse l'échantillon, et dans lequel le produit de programme informatique inclut en outre un code de programme pour intégrer une sortie du spectromètre de masse lors de l'actionnement du module de vanne (106) pour déterminer une caractéristique de l'échantillon.
